# EUROPÄISCHE PATENTSCHRIFT

(11) **EP 2 561 747 B1**
(45) Veröffentlichungstag und Bekanntmachung des Hinweises auf die Patenterteilung: **30.09.2015**
(21) Anmeldenummer: 12179419.2
(22) Anmeldetag: 06.08.2012
(51) Int. Cl.: A01F 25/13

(54) **Rübenabdeckung**
Beet cover
Recouvrement pour betteraves

(30) Priorität: 25.08.2011 DE 102011111203
(43) Veröffentlichungstag der Anmeldung: 27.02.2013
(73) Patentinhaber: Huesker Synthetic GmbH, 48712 Gescher (DE)
(72) Erfinder: Essling, Jörg, 48712 Gescher (DE)
(74) Vertreter: Patentanwälte Freischem

(56) Entgegenhaltungen:
- EP-A1- 0 206 304
- WO-A2-2007/071364
- DE-U- 1 666 689
- FR-A1- 2 828 989
- US-A- 3 894 161
- US-A- 4 538 385
- US-A- 5 048 228

## Beschreibung

Die Erfindung betrifft eine Verbundplane zur Abdeckung von Rübenmieten.

Rübenmieten sind längliche, ca. 2-4 Meter hohe Anhäufungen von Rüben, insbesondere Zuckerrüben nach der Ernte. Hier werden die Rüben vor dem Abtransport zur Weiterverarbeitung zwischengelagert. Die Breite einer Rübenmiete beträgt in der Regel bis zu 8 Meter. Rübenmieten werden nach gängiger Praxis bis zur Verladung der Rüben abgedeckt, um eine Beschädigung, insbesondere durch Frost, zu vermeiden. Zur Abdeckung wird üblicherweise ein Rübenschutzvlies mit einem Gewicht zwischen 100 und 150 g/m² verwendet.

Diese Technik hat sich zur Verminderung der Verluste bei der Rübenlagerung bewährt. Allerdings lassen sich trotz ordnungsgemäßer Mietenabdeckung Beschädigungen nicht vollständig vermeiden. Dies liegt insbesondere daran, dass sich je nach Witterung hohe Feuchtigkeitsmengen in den Rübenmieten ansammeln, welche dann bei Frost zu einer Beschädigung der Rüben führen können. Andererseits darf eine Rübenmietenabdeckung nicht vollständig Dicht sein, weil bei einer dichten Rübenabdeckung eine Schädigung der Rüben durch Feuchtigkeit und Schimmel zu befürchten ist.

Aus der DE 16 66 689 U ist bekannt, Abdeckungen für Hackfruchtmieten mit einer Belüftungsregelung auszustatten, welche die Möglichkeit gibt, den Luftaustausch praktisch gänzlich zu verhindern oder ihn je nach den jeweiligen Verhältnissen zuzulassen. Die Abdeckungen sind unter Verwendung von Kunststofffolien mehrschichtig ausgebildet. Die Belüftungsregelung besteht zum Beispiel aus verschließbaren Belüftungsspalten auf dem First der Miete. Aus der DE 10 2009 052 948 A1 ist eine mehrschichtige Verbundplane zur Verwendung als Silageabdeckung bekannt, deren Eigenschaften mittels bekannter technischer Verfahren bedarfsgerecht eingestellt werden können. Silageabdeckungen unterliegen allerdings völlig anderen Anforderungen als Abdeckungen für Rübenmieten. Durch die Folienabdeckung erfolgt ein Sauerstoffabschluss, durch den sich durch Milchsäurevergärung eine konservierende Versäuerung der Silage einstellt. Ein derartiger Sauerstoffabschluss, der zu einer Vergärung führt, ist bei einer Abdeckung für Rübenmieten unbedingt zu vermeiden. Die DE 101 06 290 A1 beschreibt eine Einzugsvorrichtung für eine vlies- und folienartige Abdeckung eines Haufwerks, vorzugsweise einer Zuckerrübenmiete, ohne dass nähere Angaben über die Materialeigenschaften der Abdeckung offenbart werden.

Aus der Druckschrift US 5,048,228 ist ein Agrotextil mit einer porösen Bahn bekannt, welche Luft- und Wasserdurchlässig ist und welche in Richtung ihrer längsten Erstreckung mit angefügten Seitenstreifen versehen ist, die dazu bestimmt sind, zum Befestigen der Anordnung in dem Boden eingegraben zu werden. Die Seitenstreifen bestehen aus flexiblem Kunststoff mit geschlossener Struktur.

Aufgabe der Erfindung ist eine Optimierung der Abdeckung von Rübenmieten.

Diese Aufgabe wird erfindungsgemäß dadurch gelöst, dass die Verbundplane zur Abdeckung von Rübenmieten einen mittleren Abschnitt mit hoher Luftdurchlässigkeit von über 1200 l/dm²/min aufweist, der auf einen oberen, mittleren Bereich einer länglichen Rübenmiete (5) aufzulegen ist, und dass die Verbundplane zwei in den zwei seitlichen Bereichen der Rübenmiete aufzulegende seitliche Abschnitte mit niedriger Luftdurchlässigkeit von unter 1000 l/dm²/min aufweist.

Die Abschnitte mit niedriger Luftdurchlässigkeit an der Seite weisen ebenfalls eine geringere Durchlässigkeit für Wasser und Feuchtigkeit auf. Hierdurch wird in den seitlichen Bereichen vermieden, dass durch Niederschlag oder Tau Feuchtigkeit in die Rübenmiete eintritt. Außerdem sind diese Abschnitte gegenüber mechanischen Beschädigungen stabiler, als herkömmliche Rübenschutzvliese. Im mittleren Bereich der Abdeckung der Rübenmiete ist ein Abschnitt mit der üblichen Luftdurchlässigkeit beziehungsweise noch höherem Luftdurchlässigkeit vorzusehen, der das Austreten insbesondere von feuchter Luft aus der Rübenmiete ermöglicht und folglich die Lüftung und Trocknung der Rübenmiete zulässt, so dass eine Schimmelbildung vermieden wird.

In der Praxis liegt die Luftdurchlässigkeit der seitlichen Abschnitte unter 1000 l/dm²/min. Vorzugsweise liegt die Luftdurchlässigkeit unter 800 l/dm²/min. Luftdurchlässigkeiten von Textilstoffen werden nach der DIN EN ISO 9237 ermittelt. Die Luftdurchlässigkeit von weniger als 1000 insbesondere weniger als 800 l/dm²/min liegt deutlich unter der Luftdurchlässigkeit üblicher Rübenschutzvliese.

Der mittlere Abschnitt der Verbundplane hat dagegen in der Praxis eine Luftdurchlässigkeit von über 1200 I/ dm²/min, die vorzugsweise über 1600 l/dm²/min aufweisen kann. Die Luftdurchlässigkeit des mittleren Abschnitts liegt daher im Bereich der Luftdurchlässigkeit üblicher Rübenschutzvliese.

In der Praxis kann der mittlere Abschnitt der Verbundplane eine Breite von 1 bis 5 Meter aufweisen. Dies ist ausreichend, um eine ausreichende Lüftung der Rübenmiete zu gewährleisten.

In der Praxis können die seitlichen Abschnitte der Verbundplane eine Breite von 3-6 Meter aufweisen. Die gesamte Verbundplane erhält durch diese Maße eine ausreichende Breite, um eine übliche Rübenmiete mit einer Bahn abzudecken.

In einer praktischen Ausführungsform kann der mittlere Abschnitt aus einem Faservlies bestehen. Für den mittleren Abschnitt wird folglich ein Material verwendet, das einem herkömmlichen Rübenschutzvlies ähnlich ist. Es können aber auch offene Gewebe oder Gittergewebe verwendet werden. Jeder seitliche Abschnitt kann in der Praxis aus einem Bändchengewebe bestehen. Das Bändchengewebe weist eine höhere Festigkeit und eine geringere Luftdurchlässigkeit als ein Vlies auf. Neben dem Schutz gegen Wasser ist folglich durch ein Bändchengewebe im unteren/seitlichen Bereich der Rübenmiete auch der mechanische Schutz erhöht.

Das Bändchengewebe kann in der Praxis unbeschichtet sein. Hierdurch erhält es eine raue Oberflächenstruktur, welche bei der Auflage auf eine Rübenmiete aufgrund der Oberflächenreibung gut anhaftet ist und Verlagerungen der Abdeckplane sowie Abdecken durch Windkräfte vermeidet. Zudem liegt ein unbeschichtetes Bändchengewebe in einem ähnlichen Preissegment wie ein Vlies, sodass die Verbundplane zu einem ähnlichen Preis angeboten werden kann, wie ein herkömmliches Rübenschutzvlies. Alternativ oder zusätzlich kann auf beiden Seiten des Bändchengewebes ein dünnes Faservlies angeordnet sein. Das Faservlies hat eine poröse, raue Oberflächenstruktur und steigert die Griffigkeit der seitlichen Abschnitte. Der Verbund aus Bändchengewebe und beidseitig angeordneten Faservliesen kann vernadelt werden. Bei dem Vernadelungsvorgang werden Fasern des Faservlieses auf der einen Seite herausgezogen und durch das Bändchengewebe hindurch in das zweite Faservlies eingetragen, wo sie von den Wirrfasern des zweiten Faservlieses gehalten werden. Dieses Verbindungsverfahren ist zuverlässig und kostengünstig.

Mindestens einer der Abschnitte, vorzugsweise alle Abschnitte können in der Praxis aus Polypropylen gefertigt sein. Die Fertigung der gesamten Abdeckplane aus einem einheitlichen Material hat Vorteile bei der Entsorgung.

Das Flächengewicht der Abschnitte kann in der Praxis ähnlich zu dem Flächengewicht von herkömmlichen Rübenschutzvliesen liegen und bei 50-150 g/m², vorzugsweise 100 g/m² liegen. Insbesondere kann das Flächengewicht des mittleren Abschnitts gleich dem Flächengewicht der seitlichen Abschnitte sein. Die homogene Gewichtsverteilung führt dazu, dass die Verbundplane ähnlich zu handhaben ist, wie ein herkömmliches Rübenschutzvlies. Es können aber auch unterschiedliche Flächengewichte gewählt werden, insbesondere wenn durch ein höheres Flächengewicht der seitlichen Abschnitte ein besseres und sichereres Aufliegen auf die Rübenmiete erzielt werden soll.

Die Abschnitte der Verbundplane können in der Praxis textiltechnisch miteinander verbunden, insbesondere vernäht werden. Hierdurch ist es möglich, dass die Abschnitte mit einer Breite von 1-5 Meter bzw. 3-6 Meter auf herkömmlichen Textilmaschinen gefertigt werden und anschließend durch einfache, kostengünstige und weitgehend automatisierte Verbindungstechniken wie das Nähen zu einer Verbundplane zusammengefügt werden können.

Mindestens ein Abschnitt und vorzugsweise alle Abschnitte können eine weiße Farbe aufweisen. Die helle, weiße Farbe der Mietenabdeckung sorgt dafür, dass Sonneneinstrahlung zu einem großen Anteil reflektiert wird und nicht auf die gelagerten Rüben einwirkt. Auch diese Maßnahme steigert die Haltbarkeit der Rüben.

Die Erfindung betrifft ferner ein Verfahren zum Abdecken einer Rübenmiete.

Zur Lösung der obengenannten Aufgabe wird bei dem Verfahren eine Verbundplane mit einem mittleren Abschnitt mit hoher Luftdurchlässigkeit und zweiseitigen Abschnitten mit niedriger Luftdurchlässigkeit derart auf die Rübenmiete aufgelegt, dass im Firstbereich der Rübenmiete, d.h. im oberen, mittleren Bereich der länglichen Anhäufung von Rüben, der mittlere Abschnitt mit hoher Luftdurchlässigkeit aufliegt und in den zwei seitlichen Bereichen der Rübenmiete die seitlichen Abschnitte aufliegen. Wie erwähnt, ermöglicht die hohe Luftdurchlässigkeit im mittleren Bereich die Lüftung der Rübenmiete, welche Verluste durch Fäulnis oder Schimmel reduziert oder vermeidet.

Eine Ausführungsform der Erfindung ist nachfolgend unter Bezugnahme auf die beigefügte Zeichnung beschrieben.
Fig. 1 zeigt eine schematische Darstellung einer abgedeckten Rübenmiete im Querschnitt.
Fig. 2 zeigt eine vergrößerte Darstellung einer Ausführungsform eines Materials, das zur Herstellung der Abdeckung der Rübenmiete verwendet wird.

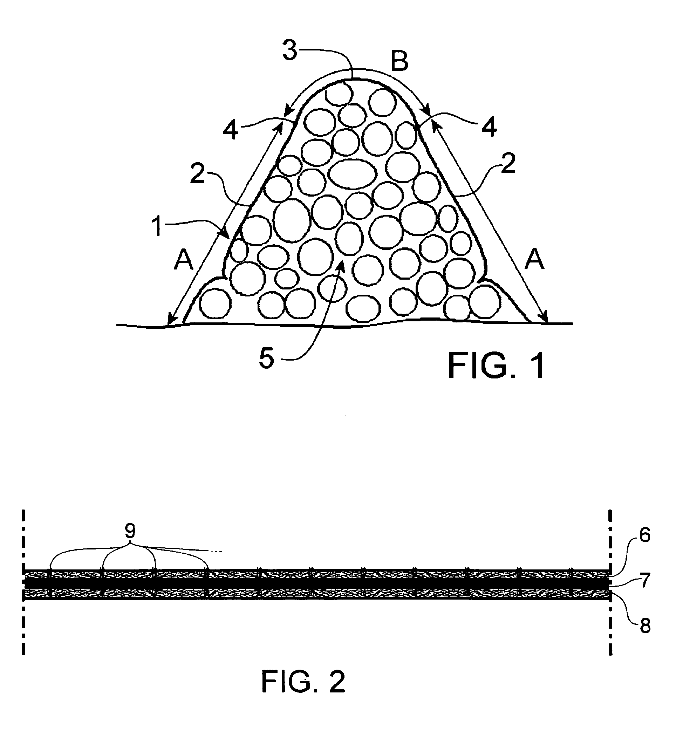

Die in Fig. 1 dargestellte Rübenmiete 5 weist eine Höhe von vorzugsweise 2-3 Metern und eine Breite im Bereich der Auflage auf dem Boden von ca. bis zu 8 Metern auf. Die Länge der Rübenmiete liegt in der Regel über 10 m und richtet sich nach der Menge der geernteten Rüben. Es ist zu erkennen, dass die Rüben der Rübenmiete nicht notwendigerweise maßstabsgerecht dargestellt sind.

Die Rübenmiete 5 ist durch eine Verbundplane 1 abgedeckt. Die Verbundplane 1 setzt sich aus drei Abschnitten zusammen. In den zwei seitlichen Bereichen der Rübenmiete 5, welche durch die schräg verlaufenden Doppelpfeile, gekennzeichnet mit dem Buchstaben A, markiert sind, befinden sich die seitlichen Abschnitte 2 der Verbundplane 1. Die seitlichen Abschnitte 2 der Verbundplane 1 bestehen aus einem unbeschichteten Polypropylen-Bändchengewebe mit einem Flächengewicht von 100 g/m² und einer Luftdurchlässigkeit von maximal 800 l/dm²/min und darunter. Die PP-Bändchengewebe sind relativ dicht gegen Feuchtigkeit und schützen die Rübenmiete gut gegen Feuchtigkeit und mechanische Beanspruchung.

Im Bereich des Firstes der Rübenmiete 5, d.h. des oberen Gipfels der Rübenmiete 5, der durch den kreisabschnittsförmigen Doppelpfeil und den Buchstaben B gekennzeichnet ist, besteht die Verbundplane 1 aus einem herkömmlichen Rübenschutzvlies. In diesem Bereich hat die Verbundplane 1 eine höhere Luftdurchlässigkeit von 1600 l/dm²/min und mehr. Folglich ist durch die hohe Luftdurchlässigkeit der Abdeckung im Firstbereich eine gute Lüftung der Rübenmiete gewährleistet.

Im Bereich der Übergänge zwischen den seitlichen Abschnitten 2 und dem mittleren Abschnitt 3 sind Nähte 4 vorgesehen, welche die Abschnitte miteinander verbinden.

Sowohl das Vlies im mittleren Abschnitt 3 der Verbundplane 1, als auch das Bändchengewebe in den seitlichen Abschnitten 2 der Verbundplane 1 bestehen vorzugsweise aus Polypropylen. Dadurch wird eine Verbundplane 1 aus einem homogenen Werkstoff geschaffen, welche leicht zu entsorgen ist. Das Polypropylen-Bändchengewebe der seitlichen Abschnitte 2 der Verbundplane 1 ist vorzugsweise unbeschichtet. Ein unbeschichtetes PP-Bändchengewebe hat eine recht große Oberflächenrauhigkeit. Hierdurch wird das Material griffig und erhält einen guten Halt auf der Rübenmiete.

Die Materialien aller Abschnitte 2 und 3 sind vorzugsweise weiß, sodass sie den größten Teil der Sonneneinstrahlung reflektieren und auch dadurch die Rüben vor Schäden schützen.

Alternativ zu einem einfachen Bändchengewebe kann ein beidseitig mit jeweils einem dünnen Faservlies 6,8 bewährtes Bändchengewebe 7 zur Bildung der seitlichen Abschnitte der Rübenmiete verwendet werden. Ein derartiges Material ist in Fig. 2 dargestellt. Es ist zu erkennen, dass die zwei Faservliese 6 und 8 mit dem dazwischen liegenden Bändchengewebe 7 durch eine Vernadelung verbunden sind. Beim Vernadeln werden Nadelbalken mit im Abstand zueinander angeordneten Nadeln mit Widerhaken durch den Schichtverbund gestoßen, wobei die Widerhaken Faserbüschel 9 aus dem einen Faservlies 8 in das zweite Faservlies 6 ziehen. Die regelmäßig beabstandeten Faserbüschel 9 werden in beiden Faservliesen 6,8 gehalten und verbinden auf diese Weise den Schichtverbund. Das Vernadeln ist eine kostengünstige Verbindungstechnik, so dass die Gesamtkosten für eine Verbundplane mit derart ausgebildeten seitlichen Abschnitten nicht unzulässig steigen.

### Bezugszeichenliste

- 1: Verbundplane
- 2: seitliche Abschnitte
- 3: mittlerer Abschnitt
- 4: Naht
- 5: Rübenmiete
- 6: Faservlies
- 7: Bändchengewebe
- 8: Faservlies
- 9: Faserbüschel

## Patentansprüche

1. Verbundplane (1) zur Abdeckung von Rübenmieten (5), **dadurch gekennzeichnet, dass** sie einen mittleren Abschnitt (3) mit hoher Luftdurchlässigkeit von über 1200 l/dm²/min aufweist, der auf einen oberen, mittleren Bereich einer länglichen Rübenmiete (5) aufzulegen ist, und dass sie zwei in den zwei seitlichen Bereichen der Rübenmiete (5) aufzulegende seitliche Abschnitte (2) mit niedriger Luftdurchlässigkeit von unter 1000 l/dm²/min aufweist.

2. Verbundplane (1) nach Anspruch 1, **dadurch gekennzeichnet, dass** die Luftdurchlässigkeit der seitlichen Abschnitte (2) unter 800 l/dm²/min liegt.

3. Verbundplane (1) nach Anspruch 1, **dadurch gekennzeichnet, dass** die Luftdurchlässigkeit des mittleren Abschnitts (3) über 1600 l/dm²/min liegt.

4. Verbundplane (1) nach einem der vorangehenden Ansprüche, **gekennzeichnet durch** mindestens eines der folgenden Merkmale
• der mittlere Abschnitt (3) weist eine Breite von 1 bis 5 m auf;
• jeder seitliche Abschnitt (2) weist eine Breite von 3 bis 6 m auf.

5. Verbundplane (1) nach einem der vorangehenden Ansprüche, **dadurch gekennzeichnet, dass** jeder seitliche Abschnitt (2) aus einem Bändchengewebe besteht.

6. Verbundplane (1) nach Anspruch 5, **gekennzeichnet durch** mindestens eines der folgenden Merkmale:
• das Bändchengewebe ist unbeschichtet;
• auf beiden Seiten des Bändchengewebes (7) ist je ein dünnes Faservlies (6,8) angeordnet;
• der Verbund aus Bändchengewebe (7) und beidseitig angeordneten Faservliesen (6,8) ist vernadelt.

7. Verbundplane (1) nach einem der vorangehenden Ansprüche, **gekennzeichnet durch** mindestens eines der folgenden Merkmale
• der mittlere Abschnitt (3) besteht aus einem Faservlies oder einem offenen Gewebe;
• mindestens ein Abschnitt (2 oder 3), vorzugsweise alle Abschnitte (2,3), ist/sind aus Polypropylen gefertigt.

8. Verbundplane (1) nach einem der vorangehenden Ansprüche, **gekennzeichnet durch** mindestens eines der folgenden Merkmale
• der mittlere Abschnitt (3) weist ein Flächengewicht von 50 bis 150 g/m², vorzugsweise 100 g/m² auf;
• jeder seitliche Abschnitt (2) weist ein Flächengewicht von 80 bis 150 g/m², vorzugsweise 120 g/m² auf;
• die Flächengewichte des mittleren und der seitlichen Abschnitte (2,3) sind gleich.

9. Verbundplane (1) nach einem der vorangehenden Ansprüche, **dadurch gekennzeichnet, dass** die Abschnitte (2,3) miteinander textiltechnisch verbunden, insbesondere vernäht sind.

10. Verbundplane (1) nach einem der vorangehenden Ansprüche, **dadurch gekennzeichnet, dass** mindestens ein Abschnitt (2 oder 3), vorzugsweise alle Abschnitte (2,3) eine weiße Farbe aufweisen.

11. Verfahren zum Abdecken einer Rübenmiete (5), **dadurch gekennzeichnet, dass** eine Verbundplane (1) mit einem mittleren Abschnitt (3) mit hoher Luftdurchlässigkeit und zwei seitlichen Abschnitten (2) mit niedriger Luftdurchlässigkeit derart auf die Rübenmiete (5) aufgelegt wird, dass im Firstbereich der mittlere Abschnitt (3) mit hoher Luftdurchlässigkeit auf der Rübenmiete (5) aufliegt und in den zwei seitlichen Bereichen der Rübenmiete (5) die seitlichen Abschnitte (2) aufliegen.

## Claims

1. Composite tarpaulin (1) for covering beet clamps (5), **characterised in that** it has a central portion (3) with high air permeability of greater than 1200 l/dm²/min, which is to be placed on an upper, central region of an elongated beet clamp (5), and that it has two lateral portions (2) to be placed in the two lateral regions of the beet clamp (5) with low air permeability of less than 1000 l/dm²/min.

2. Composite tarpaulin (1) according to Claim 1, **characterised in that** the air permeability of the lateral portions (2) is less than 800 l/dm²/min.

3. Composite tarpaulin (1) according to Claim 1, **characterised in that** the air permeability of the central portion (3) is greater than 1600 l/dm²/min.

4. Composite tarpaulin (1) according to any one of the preceding claims, **characterised by** at least one of the following features
• the central portion (3) has a width of 1 to 5 m;
• each central portion (2) has a width of 3 to 6 m.

5. Composite tarpaulin (1) according to any one of the preceding claims, **characterised in that** each lateral portion (2) is composed of a woven tape fabric.

6. Composite tarpaulin (1) according to Claim 5, **characterised by** at least one of the following features:
• the woven tape fabric is uncoated;
• a thin fibrous web (6, 8) is respectively arranged on both sides of the woven tape fabric (7);
• the composite of woven tape fabric (7) and fibrous webs (6, 8) arranged on both sides is needled.

7. Composite tarpaulin (1) according to any one of the preceding claims, **characterised by** at least one of the following features
• the central portion (3) is composed of a fibrous web or an open fabric;
• at least one portion (2 or 3), preferably all portions (2, 3), is/are manufactured from polypropylene

8. Composite tarpaulin (1) according to any one of the preceding claims, **characterised by** at least one of the following features
• the central portion (3) has a grammage of 50 to 150 g/m², preferably 100 g/m²;
• each central portion (2) has a grammage of 80 to 150 g/m², preferably 120 g/m²;
• the grammages of the central and of the lateral portions (2, 3) are identical.

9. Composite tarpaulin (1) according to any one of the preceding claims, **characterised in that** the portions (2, 3) are connected to one another in terms of textile engineering, in particular stitched to one another.

10. Composite tarpaulin (1) according to any one of the preceding claims, **characterised in that** at least one portion (2 or 3), preferably all portions (2, 3) have a white colour.

11. Method for covering a beet clamp (5), **characterised in that** a composite tarpaulin (1) with a central portion (3) with high air permeability and two lateral portions (2) with low air permeability is placed on the beet clamp (5) such that the central portion (3) with high air permeability lies on the beet clamp in the ridge region and the lateral portions (2) lie in the two lateral regions of the beet clamp (5).

## Revendications

1. Bâche composite (1) destinée à recouvrir des silos de betteraves (5), **caractérisée en ce qu'**elle présente une section médiane (3) ayant une perméabilité à l'air supérieure à 1 200 l/dm²/min, qui doit être posée sur une partie médiane supérieure d'un silo allongé de betteraves (5), et **en ce qu'**elle présente deux sections latérales (2) devant être posées dans les deux parties latérales du silo de betteraves (5), ayant une perméabilité à l'air inférieure à 1 000 l/dm²/min.

2. Bâche composite (1) selon la revendication 1, **caractérisée en ce que** la perméabilité à l'air des sections latérales (2) est inférieure à 800 l/dm²/min.

3. Bâche composite (1) selon la revendication 1, **caractérisée en ce que** la perméabilité à l'air de la section médiane (3) est supérieure à 1 600 l/dm²/min.

4. Bâche composite (1) selon l'une quelconque des revendications précédentes, **caractérisée en ce qu'**elle présente au moins l'une des caractéristiques suivantes :
• la section médiane (3) a une largeur de 1 à 5 m ;
• chaque section latérale (2) a une largeur de 3 à 6 m.

5. Bâche composite (1) selon l'une quelconque des revendications précédentes, **caractérisée en ce que** chaque section latérale (2) est constituée d'un tissu à bandelettes.

6. Bâche composite (1) selon la revendication 5, **caractérisée en ce qu'**elle présente au moins une des caractéristiques suivantes :
• le tissu à bandelettes n'est pas revêtu ;
• sur les deux côtés du tissu à bandelettes (7) est disposé un mince non-tissé respectif (6, 8) ;
• l'interconnexion du tissu à bandelettes (7) et des non-tissés (6, 8) disposés des deux côtés est aiguilletée.

7. Bâche composite (1) selon l'une quelconque des revendications précédentes, **caractérisée en ce qu'**elle présente au moins une des caractéristiques suivantes :
• la section médiane (3) est constituée d'un non-tissé ou d'un tissu ouvert;
• au moins une section (2 ou 3), de préférence toutes les sections (2, 3) est/sont fabriquées en polypropylène.

8. Bâche composite (1) selon l'une quelconque des revendications précédentes, **caractérisée en ce qu'**elle présente au moins une des caractéristiques suivantes :
• la section médiane (3) présente un grammage de 50 à 150 g/m², de préférence de 100 g/m² ;
• chaque section latérale (2) présente un grammage de 80 à 150 g/m², de préférence de 120 g/m² ;
• les grammages de la section médiane et des sections latérales (2, 3) sont identiques.

9. Bâche composite (1) selon l'une quelconque des revendications précédentes, **caractérisée en ce que** les sections (2, 3) sont reliées l'une à l'autre par une technique de l'industrie du textile, en particulier sont cousues.

10. Bâche composite (1) selon l'une quelconque des revendications précédentes, **caractérisée en ce qu'**au moins une section (2 ou 3), de préférence toutes les sections (2, 3) sont de couleur blanche.

11. Procédé pour recouvrir un silo de betteraves (5), **caractérisé en ce qu'**une bâche composite (1) ayant une section médiane (3) ayant la perméabilité à l'air supérieure et deux sections latérales (2) ayant une perméabilité à l'air inférieure, va être déposée au-dessus du silo de betteraves (5) tel que la section médiane (3) ayant la perméabilité à l'air supérieure va reposer sur une zone faitière du silo de betteraves (5), et les deux sections latérales (2) vont reposer dans les deux zones latérales du silo de betteraves (5).
